# EUROPEAN PATENT SPECIFICATION

(11) **EP 0 638 623 B1**
(45) Date of publication and mention of the grant of the patent: **09.12.1998**
(21) Application number: 94112256.6
(22) Date of filing: 05.08.1994
(51) Int. Cl.: C09K 5/04

(54) **Quasi-azeotropic mixtures utilizable as refrigerating fluids**
Quasi-azeotrope Mischungen verwendbar als Kühlflüssigkeiten
Mélanges quasi-azéotropes utilisables comme fluides frigorifiques

(30) Priority: 13.08.1993 IT MI931829
(43) Date of publication of application: 15.02.1995
(73) Proprietor: AUSIMONT S.p.A., I-20121 Milano (IT)
(72) Inventor: Basile, Giampiero, Alessandria (IT); Musso, Ezio, Castelletto D'Orba, Alessandria (IT)
(74) Representative: Sama, Daniele, Dr.

(56) References cited:
- EP-A- 0 011 971
- EP-A- 0 451 692
- EP-A- 0 583 179
- WO-A-91/13968
- WO-A-92/01762
- WO-A-93/15162
- US-A- 4 943 388
- US-A- 5 211 867
- US-A- 5 234 613
- DATABASE WPI Week 8824, Derwent Publications Ltd., London, GB; AN 88-165828 & JP-A-63 105 088 (SANYO ELECTRIC, ASAHI GLASS) 10 May 1988 & PATENT ABSTRACTS OF JAPAN vol. 12, no. 349 (C-529) 20 September 1988 & JP-A-63 105 088 (KANAI TAKESHI) 10 May 1988

## Description

The present invention relates to refrigerating mixtures, more particularly to refrigerating mixtures utilizable in circuits working according to the Rankine cycle.

As known, R-12 (CCl₂F₂) is the product most widely used as refrigerant for circuits working at middle-high temperatures, while for the refrigeration at middle-low temperatures, in/ particular for commercial refrigeration, for the time being R-502 is used, i.e. a mixture of R-22 (CHClF₂) and R-115 (CClF₂CF₃). It is also known that, because of the high depleting potential of R-12 and R-115 with respect to ozone present in the stratosphere, manufacturing and marketing of such products, and more generally of chlorofluorocarbons (CFC), will be restricted or banned within a few years as stipulated by some International agreements (Montreal Protocol and subsequent amendments).

Therefore, the need of finding other products or compositions capable of effectively replacing R-12 and R-502, without causing environmental damages, is particularly felt. For this purpose, it was suggested using hydrofluorocarbons (HFC) or hydrochlorofluorocarbons (HCFC), whose depleting potential with respect to ozone (Ozone Depleting Potential, ODP) is very low or even null, as very low is also their contribution to the so called "greenhouse effect", measured by the Global Warming Potential (GWP).

However, for the time being, the proposed substitutive products, such as R-134a (CF₃-CH₂F) and R-125 (CF₃-CHF₂), show in many applications a refrigerant capacity, measured by the Coefficient of Performance (COP), lower than that of R-12 and R-502; for instance R-125, depending on the working conditions, has a COP 10-15% lower than that of R-502.

In order to overcome the drawbacks of single refrigerants, the use of mixtures based on HCFC and/or HFC has been proposed. However, if casual mixtures are employed, other inconveniences are encountered. First of all, because of the different volatility of the components, fractionation occurs when passing from liquid phase to vapour phase and viceversa, with a remarkable variation in the condensation and evaporation temperatures, so as to impair even considerably the efficiency of the refrigerating circuit. Moreover, the filling up of the refrigerant, necessary in consequence of unavoidable losses from the refrigerating plant, cannot be carried out with the original mixture, but it is necessary to proportion the various components according to the exact composition of the mixture remained after fractionation, so as to restore the initial optimum composition. Lastly, if the mixture contains a more volatile, inflammable component, the vapour phase enriches in such component until the inflammability point is reached, with evident hazard during its use. Similarly, if the inflammable component is less volatile, it concentrates in the liquid phase, giving rise to an inflammable liquid.

In order to avoid such drawbacks, it is therefore convenient to use mixtures having an azeotropic behaviour, i.e. mixtures characterized in that they behave as pure fluids. However, the obtainment of azeotropic mixtures is an extremely rare event, since it requires a particular combination of boiling temperatures and deviations from the ideal behaviour of the various components. Therefore, the study of refrigerating mixtures has been directed to the obtainment of "quasi-azeotropic" mixtures. The definition, among those suggested until now, which better suits the purposes of the present invention, is that according to which a quasi-azeotropic behaviour occurs if the percentage pressure variation in consequence of a 50% evaporation of the liquid (indicated as △p/p·100) is comprised between 5 and 15%, preferably between 5 and 10% (in this respect see the article by D.A. Didion and D.B. Bivens in Int. J. Refrig., vol. 13, p. 163 and following, 1990).

A further characteristic desirable for the substituents of the CFC-based refrigerants is that they shall not virtually require any modifications of elements, materials and, generally, components of the system in which they operate: in this case we can speak of "drop-in" substituents. In particular, it would be advantageous having a product or a mixture soluble in the lubricating mineral or alkyl-benzenic oils commonly used with conventional refrigerants, or soluble in an oil compatible with the oils used at present. In such a way, before introducing the new refrigerant, complex operations of complete discharging, accurate washing and drying of the referigerating plants would be avoided.

The Applicant has unexpectedly found that mixtures based on HFC and/or HCFC as hereinunder defined, have quasi-azeotropic behaviour, are non-flammable, and are characterized by vapour pressure curves such as to make them particularly suitable as substituents for refrigerants R-12 or R-502. Such mixtures are at the same time characterized by an environmental impact, expressed in terms of OPD and GWP, very low or null.

Therefore, object of the present invention are quasi-azeotropic mixtures, utilizable as refrigerating fluids, consisting essentially of: (I) from 20 to 59% of CF₃-CHF₂ (R-125), from 40 to 75% of CHClF₂ (R-22), and from 1 to 10% of cyclopropane (RC-270); (II) from 5 to 30% of CH₂F₂ (R-32), from 68 to 90 of R-22, and from 1 to 5% of proprane (R-290); (III) from 49 to 60% of R-125, from 35 to 49% of CF₃-CH₃ (R-143a), and from 1 to 5% of RC-270 or R-290; (IV) from 20 to 50% of R-125, from 5 to 20% of R-143a, from 1 to 5% of R-290, and from 40 to 60% of R-22; (V) from 2 to 8% of R-32, from 88 to 97% of CF₃-CH₂F (R-134a), and from 1 to 5% of dimethylether (DME); (VI) from 3 to 10% of R-143a, from 85 to 96% of R-134a, and from 1 to 5% of DME; or (VII) from 5 to 20% of R-125, from 75 to 90% of R-134a, and from 1 to 5% of DME; the percentages being expressed by weight.

More specifically, it has been found that the mixtures from (I) to (IV) have a vapour pressure curve which renders them particularly suitable as substituents of R-502, while the mixtures from (V) to (VII) can be advantageously used as substituents of R-12. Among the mixtures from (I) to (IV), the mixtures (I), (II) and (IV) are particularly preferred, since of the "drop-in" type, being characterized by a very good compatibility with the mineral or alkyl-benzenic lubricating oils contained in the refrigerating circuits operating at present with R-12 and R-502.

Generally, the mixtures object of the present invention, being constituted by different refrigerants, show as advantage a better flexibility and therefore they meet better than one single component the thermodynamic and thermophysical characteristics for a certain refrigerating circuit configuration.

Moreover, thanks to their quasi-azeotropic behaviour, said mixtures do not fractionate into liquids or inflammable vapours also after substantial evaporations, around 50% by weight.

A further advantage of the mixtures object of the present invention is that, once dissolved in the lubricating oil, they do not cause, also at high temperatures and for long contact times, noticeable alterations in the chemical-physical characteristics of both the oil and the metal surfaces usually present in the refrigerating circuits.

Some working examples of the present invention are hereinunder reported, whose purpose is merely illustrative but not limitative of the scope of the invention itself.

### EXAMPLES 1-7

Various mixtures according to the present invention were prepared: the compositions, expressed as % by weight, are reported in Table 1. Each mixture was characterized according to the following tests:
(a) Quasi-azeotropic behaviour
   The mixture, of known composition and weight, was introduced into a previously evacuated small cylinder having an internal volume of 100 cm³. The filling volume ratio was initially equal to 0.8. The cylinder was introduced into a thermostatic bath at 25°C. As soon as the equilibrium was reached, the inner pressure was measured by means of a pressure transducer. The content of the cylinder was then partly discharged by means of a suitable valve, until the cylinder weight reached a value corresponding to 50% of the initial load, keeping the temperature at 25°C. The pressure inside the tube was measured again at 25°C. The mixture had a quasi-azeotropic behaviour if the pressure drop, expressed as percentage with respect to the initial pressure (△p/p·100), was comprised between 5 and 15%, preferably between 5 and 10%.
(b) Vapour pressure curve and boiling temperature
   Using the same cylinder described above, filled with the refrigerating mixture up to a volume ratio of 0.8 and immersed into the thermostatic bath, the equilibrium pressure was measured at different temperatures (-25°, 0°, +25°, +50°C). The boiling temperature was determined by slowly reducing the temperature of the thermostatic bath until the equilibrium pressure of 1.013 bar was reached: the temperature corresponding to such a pressure was the boiling temperature of the mixture.
(c) Inflammability
   The inflammabilities of the liquid and of the vapour phases were determined, according to ASTM Method E-681, both on the initial mixture and after evaporation of 50% by weight of the mixture itself. The measurement was thus carried out for each mixture on four samples, two in the liquid phase and two in the vapour phase, so as to simulate the effect that would be achieved after a loss from storage containers or from feeding lines, with leakage of potentially flammable vapours and/or liquids. In any case, the samples resulted non-flammable.
(d) Solubility in lubricating oil
   The oil was loaded in a test tube having thick walls resistant to high pressures. After cooling at -30°C, the refrigerating mixture was introduced and the test tube was then flame-closed and immersed in a thermostatic bath. The temperature was firstly slowly increased up to 60°C and then reduced until clouding was noticed (cloudy point).
(e) ODP and GWP
   They were calculated on the basis of the values of pure components and of the composition of each mixture (weighted average).

The results are reported in Table 1. For comparative purposes, the same measurements were carried out on R-502 (mixture constituted by 48.8% by weight of R-22 and 51.2% by weight of R-115) (Example 7).

For the mixtures of Examples 1-2, the stability test in the presence of metals (copper or steel) was carried out, according to ASHRAE Method 97-1983 (RA 89), with some minor modifications, as reported hereinafter. The same test was repeated for the above R-502 mixture.

One copper and one steel coupon and about 1 ml of synthetic mineral oil ZERICE^{(R)} S46 (Exxon) were introduced into a glass tube, having a 4.5 mm diameter and a 250 mm height. The glass tube was then inserted into a steel cylinder fitted to contain exactly the tube, and equipped with a valve. The cylinder was evacuated and then cooled in a thermostatic bath at -30°C. About 1 ml of refrigerating mixture, cooled at -30°C, was then introduced into the cylinder. The closed cylinder was kept in a stove at 175°C for 14 days.

After such treatment, the cylinder was opened and the refrigerant evaporated inside a sampler, whose content was then analyzed by gaschromatography to detect the presence of possible by-products (deriving from the decomposition either of the refrigerant itself or of the mineral oil). The oil was titrated to determine acidity (expressed as mg KOH/ g oil). The metal coupons were submitted to visual examination to reveal possible changes in the surface appearance due to corrosion; for the steel coupons the presence of possible copper deposits (the so called "copper plating") was also determined. The extent of such phenomena was evaluated by means of an empirical index varying from 0 (no effect) to 8 (marked effect). The results are reported in Table 2.

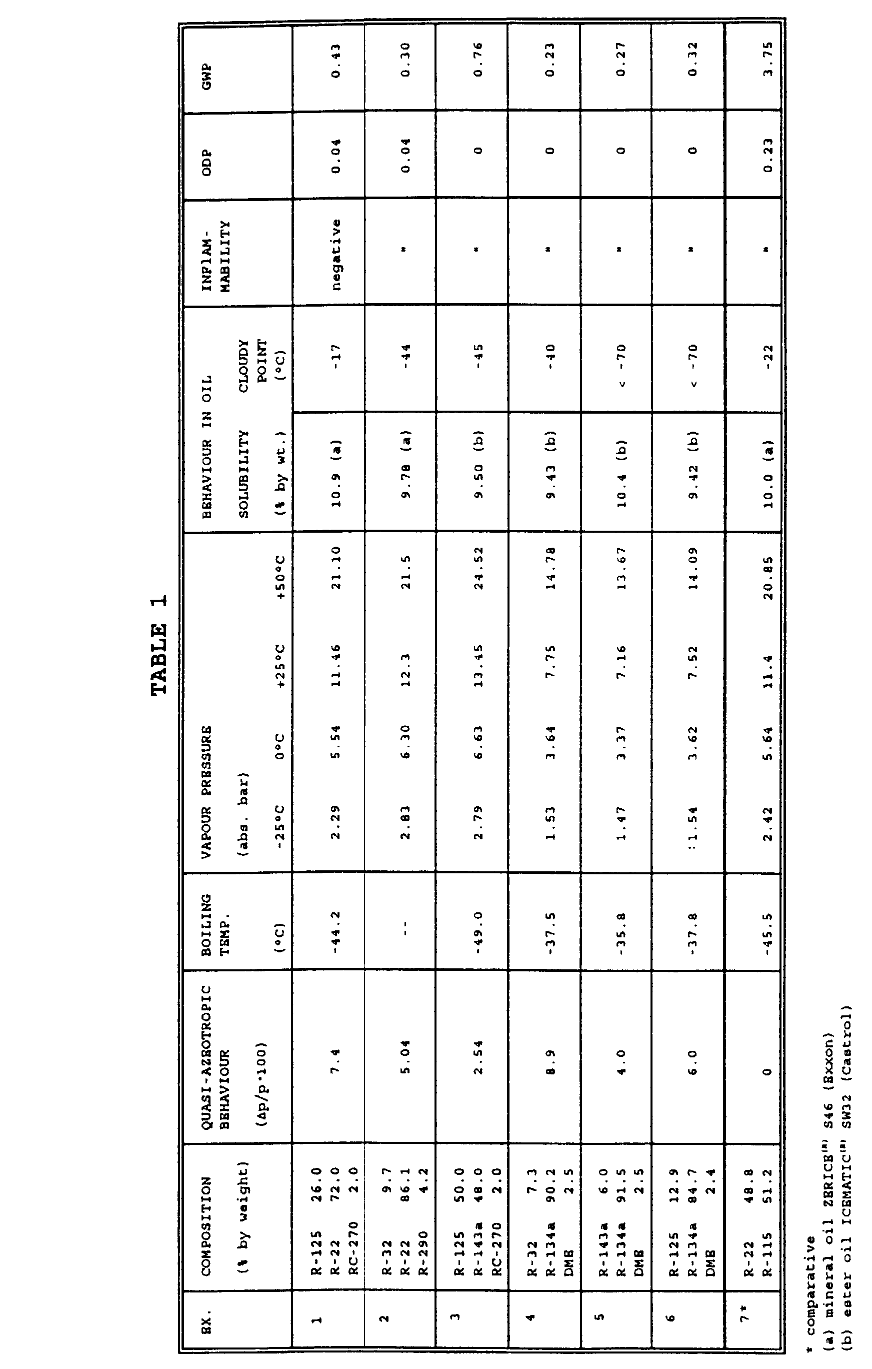

**TABLE 2**

| EX. | OIL | | METALS | | | BY-PRODUCTS (ppm) |
|---|---|---|---|---|---|---|
| | Colour (§) | Acidity (mgKOH/g) | Steel (§) | Copper (§) | Copper Plating (§) | |
| 1 | 1 | 0.23 | 0 | 0.5 | 0 | 100 |
| 2 | 2 | 0.20 | 0 | 0.2 | 0 | < 50 |
| 7* | 2.5 | 0.23 | 0 | 0.5 | 0 | < 50 |

| | | | | | | |
|---|---|---|---|---|---|---|
| * comparative (R-502) (§) visual evaluation (scale from 0 to 8) | | | | | | |

### EXAMPLE 8-10

A mixture of type (IV) (Example 8) was tested in a refrigerator for freezed food as regards refrigerant capacity and Coefficient of Performance (COP). For the sake of comparison, the same tests were carried out on a standard R-502 mixture (Example 9, comparative) and on a R-125/R-290/R-22 mixture (Example 10, comparative).

The tests were carried out on a commercial refrigerator for freezed food, having an internal free volume of 1290 dm³, and equipped with a hermetic compressor, a heat exchanger, and a motorized laminating valve for fluid expansion. The compressor used an alkyl benzenic lubricating oil ZERICE^{(R)} S46 (Exxon). The refrigerator was equipped with manometers and thermocouples for measuring pressures and temperatures at inlets and outlets of compressor, condenser and evaporator. The refrigerator was placed into a room at 25 ± 1°C, and with a relative humidity of 60 ± 5%, and the internal temperature was kept at -20°C by means of electric resistances. The temperature of the refrigerant at the evaporator outlet was also kept at -20°C. The measurements of the refrigerant capacity were carried out in steady state conditions by standard techniques (calorimetric method). The COP was calculated as ratio between the refrigerant capacity and the overall absorbed electric power. Some of the mixtures were also tested for oil solubility, determining the cloudy point as described above. The results are reported in Table 3.

On the mixture of Example 8, having composition R-125 31.0%; R-143a 10.0%; R-290 2.0%; R-22 57.0% (by weight), the following further measurements were carried out, according to the methods described hereinbefore:
Quasi-azeotropic behaviour (Δp/p·100) : 2.8;
Boiling temperature (1.013 bar) : -45.5°C;
Vapour pressure (abs. bar) : 2.40 at -25°C ; 5.77 at 0°C; 11.84 at +25°C ; 21.74 at +50°C;
ODP : 0.029 ; GWP : 0.66.

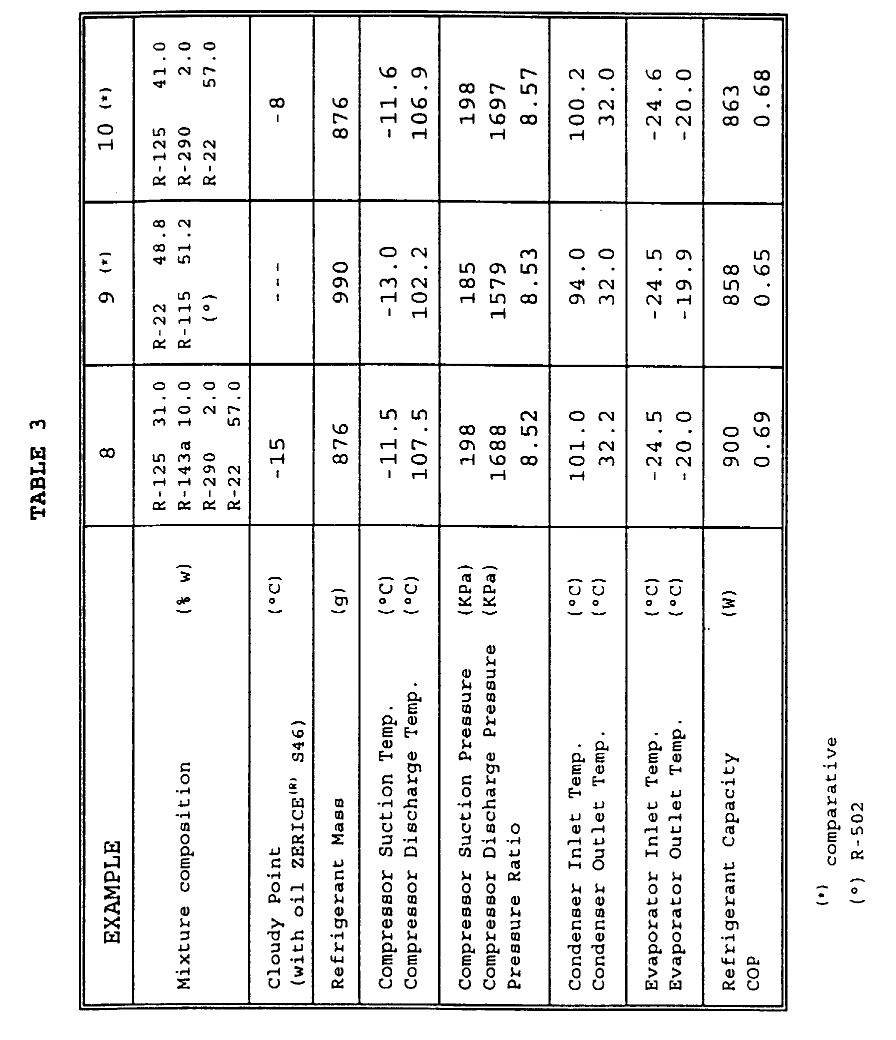

## Claims

1. Quasi-azeotropic mixtures consisting essentially of: (I) from 20 to 59% of CF₃-CHF₂ (R-125), from 40 to 75% of CHClF₂ (R-22), and from 1 to 10% of cyclopropane (RC-270); (II) from 5 to 30% of CH₂F₂ (R-32), from 68 to 90 of R-22, and from 1 to 5% of propane (R-290) ; (III) from 49 to 60% of R-125, from 35 to 49% of CF₃-CH₃ (R-143a) and from 1 to 5% of RC-270 or R-290; (IV) from 20 to 50% of R-125, from 5 to 20% of R-143a, from 1 to 5% of R-290, and from 40 to 60% of R-22; (V) from 2 to 8% of R-32, from 88 to 97% of CF₃-CH₂F (R-134a), and from 1 to 5% of dimethylether (DME); (VI) from 3 to 10% of R-143a, from 85 to 96% of R-134a, and from 1 to 5% of DME; or (VII) from 5 to 20% of R-125, from 75 to 90% of R-134a, and from 1 to 5% of DME; the percentages being expressed by weight.

2. Mixtures according to claim 1, having the composition (I), (II), or (IV).

3. Use of the quasi-azeotropic mixtures according to claims 1 or 2 as refrigerating fluids.

## Patentansprüche

1. Quasiazeotrope Gemische, im wesentlichen bestehend aus: (I) 20 bis 59% CF₃-CHF₂ (R-125), 40 bis 75% CHClF₂ (R-22) und 1 bis 10% Cyclopropan (RC-270); (II) 5 bis 30% CH₂F₂ (R-32), 68 bis 90% R-22 und 1 bis 5% Propan (R-290); (III) 49 bis 60% R-125, 35 bis 49% CF₃-CH₃ (R-143a) und 1 bis 5% RC-270 oder R-290; (IV) 20 bis 50% R-125, 5 bis 20% R-143a, 1 bis 5% R-290 und 40 bis 60% R-22: (V) 2 bis 8% R-32, 88 bis 97% CF₃-CH₂F (R-134a) und 1 bis 5% Dimethylether (DME); (VI) 3 bis 10% R-143a, 85 bis 96% R-134a und 1 bis 5% DME; oder (VII) 5 bis 20% R-125, 75 bis 90% R-134a und 1 bis 5% DME, wobei sich die Prozentangaben auf das Gewicht beziehen.

2. Gemische nach Anspruch 1 mit der Zusammensetzung (I), (II) oder (IV).

3. Verwendung der quasiazeotropen Gemische nach Anspruch 1 oder 2 als Kühlflüssigkeiten.

## Revendications

1. Mélanges quasi-azéotropes consistant essentiellement en :
(I) de 20 à 59% de CF₃-CHF₂ (R-125), de 40 à 75% de CHClF₂ (R-22), et de 1 à 10% de cyclopropane (RC-270) ;
(II) de 5 à 30% de CH₂F₂ (R-32), de 68 à 90% de R-22, et de 1 à 5% de propane (R-290) ;
(III) de 49 à 60% de R-125, de 35 à 49% de CF₃-CH₃ (R-143a), et de 1 à 5% de RC-270 ou R-290 ;
(IV) de 20 à 50% de R-125, de 5 à 20% de R-143a, de 1 à 5% de R-290, et de 40 à 60% de R-22 ;
(V) de 2 à 8% de R-32, de 88 à 97% de CF₃-CH₂F (R-134a), et de 1 à 5% diméthyléther (DME) ;
(VI) de 3 à 10% de R-143a, de 85 à 96% de R-134a, et de 1 à 5% de DME ; ou
(VII) de 5 à 20% de R-125, de 75 à 90% de R-134a, et de 1 à 5% de DME ;
les pourcentages étant exprimés en poids.

2. Mélanges selon la revendication 1, ayant la composition (I), (II) ou (IV).

3. Utilisation des mélanges quasi-azéotropes tels que définis à l'une des revendications 1 ou 2 comme fluides réfrigérants.
